# EUROPEAN PATENT SPECIFICATION

(11) **EP 3 501 891 B1**
(45) Date of publication and mention of the grant of the patent: **12.08.2020**
(21) Application number: 18198527.6
(22) Date of filing: 04.10.2018
(51) Int. Cl.: B60P 1/64, B62D 21/14, B62D 53/06, B62D 21/04

(54) **OCTAGONAL TELESCOPIC EXTENSIBLE CONTAINER CARRIER VEHICLE**
ACHTECKIGES, TELESKOPISCH AUSZIEHBARES BEHÄLTERTRÄGERFAHRZEUG
VÉHICULE PORTE-CONTENEURS OCTOGONAL TÉLESCOPIQUE EXTENSIBLE

(30) Priority: 19.12.2017 TR 201720832
(43) Date of publication of application: 26.06.2019
(73) Proprietor: Tirsan Treyler Sanayi Ve Ticaret Anonim Sirketi, 54580 Sakarya (TR)
(72) Inventor: DOGU, CAVIT CEYHUN, 54580 Sakarya (TR); UZÇAKAR, YASEMIN, 54580 Sakarya (TR)
(74) Representative: Yamankaradeniz, Kemal

(56) References cited:
- DE-B3- 10 315 145
- DE-U1-202017 002 097
- US-A1- 2014 125 091
- US-A1- 2016 311 470
- US-B1- 6 186 533

## Description

### Technial Field

The invention relates to an octagonal telescopic extensible container carrier vehicle for transporting containers.

In particular, the invention relates to an octagonal telescopic container carrier with a telescopic construction that prevents damage to the construction of the vehicle against torsional forces resulting from the rigid maneuvers of the vehicle, which can be extended and shortened by the movement of one or more nested frames.

### The Current Status of the Technique

In the current situation, thanks to the telescopic adjustable container vehicles structure, it complies with all container types conforming to ISO 668 norms. Container vehicles with extensible construction are produced as front, middle and rear extensible in accordance with customer demands. Thanks to the the construction, telescopic container carrier vehicles can meet the needs of more than one container chassis vehicle. In contrast to the benefits of all this functionality, there are disadvantages of this construction.

When we analyze the existing constructions, it is seen that the chassis sections are the same. Telescopic sections of all competing companies are produced in quadrangular form. In rectangular construction, crosses are welded on untwisted flat surfaces. Torsional force resulting from the hard maneuvering of the vehicle that is offered to the customer after the welding process is applied to the welded flat area on the quadrant. Such forces cause weld failures and after sales complaints. At the same time, the low number of twists on the welded surface increases the weld deformation. Deformation after heat causes visual problems during and after production.

Another disadvantage of the telescopic structure is hard maneuvers made by the driver during the transportation of high tonnages. Such maneuvers deform the rectangular chassis section. As a result of the deformation, the distortion in the inner and outer frame structure causes the front-extensible, middle-extensible and rear-extensible platform assembly to be compressed. Vehicle to be adjusted according to the load after the jam cannot perform its functionality.

Another effect of the rigid maneuvers on the vehicle is the torsional force on the chassis when the rigid maneuver is performed. Four points of telescopic quadrangular contact with each other affect the point force with torsion. Correction of deformations caused by this kind of driver error is difficult and costly. After the field visits, it was seen that the quadrangular structure of the telescopic container vehicles broke down in a short time and the drivers tried to make the deformed telescopic structure usable by searching the flat surfaces. For the purpose of reducing all this deformation, high-alloyed sheet materials are used in functional telescopic vehicles. Because of the narrow angle of the rectangular geometry, these materials are stretching back after forming. There are also problems in the mounting of nesting frames after stretching back.

Examples of adjustable containers are GB2255054 and the United Kingdom patent document entitled "Adjustable Container Tools". The current invention includes chassis members 18, 19 with cross members 20, 20A, 25, 26, 27, 21 having movable cylinders 32, 34 in cavities 18, 19. The fixed element 21 carries the twist locks 23. Elements 25, 26 form part of structure 24 which is movable by arm 35 by a rear position in which the rear cap 40 can be held by the locks on the elements 25, 26 and the front housing can be held by the locks (27, 21) and have a forward position in which a container (25, 26) is supported. This is mentioned to as providing a convenient positioning of the container in the forward position. However, there is no mention of an octagonal telescopic extensible container carrier with telescopic construction, which prevents the damage of the vehicle construction against torsional force, which can be extended and shortened by the movement of one or more nested frames.

Consequently, the existence of the need for an octagonal telescopic extensible container carrier vehicle and the insufficiency of existing solutions necessitated an improvement in the relevant technical field.

### The Purpose Of The Invention

The current invention relates to an octagonal telescopic extensible container carrier which meets the above mentioned requirements, eliminates potential disadvantages and provides additional advantages.

The main object of the octagonal telescopic extensible container carrier means; deformation caused by welding heat is minimized and damage to the vehicle construction is prevented. Thanks to the advantages gained by the octagonal structure, the number of twists is doubled and the damage of the vehicle construction is prevented. By preventing the deformation caused by welding heat, it is possible to visually improve the vehicle by eliminating the defects of the finished vehicle during the telescopic installation. The design of the crosses on the chassis according to the octagonal form gives the advantage of welding. In contrast to the quadrangular condition, after the torsion the weld cracking problems are eliminated and the torsion welding and brackets are evenly distributed to eliminate the shear force on the weld. All these welded production gains increase the quality of the vehicle and reduce the labor time.

Another object of the invention is the torsion force caused by the rigid driving maneuvers during the transportation of high tonnages and the telescopic vehicles increased the doubling of the number of twists in octagonal structure and doubled the strength. The torsional force generated by the rigid driving maneuvers installed on the chassis is doubled by doubling the contact point in the octagonal structure the point force is reduced to half and the strength of the vehicle is doubled. The geometric angles of the new construction are larger than the rectangle, thus facilitating the forming process of high-strength steels, reducing the streching back rate. Geometrically, the low surface area of the octagonal structure according to the rectangular structure reduces the cost of high-strength steel use. The high cost of high-alloyed steel makes it possible to achieve cost savings.

The above-mentioned objectives can be extended and shortened by the movement of one or more nested frames to attain their most general state, the rigid maneuvers of the vehicle with the rigid maneuvers against the torsion force of the vehicle construction to prevent damage to the telescopic construction, is an octagonal telescopic extensible container carrier vehicle, the telescopic chassis, which contains all the components and consoles forming the main skeleton of the octagonal telescopic extensible carrier, is the middle extensible platform assembly forming the middle region of the octagonal telescopic extensibe carrier which can be extended by the telescopic chassis to be carried by the telescopic chassis, rear extensible platform assembly forming the rear region of the octagonal telescopic extensible carrier, which can be extended by the telescopic chassis to extend the load, it comprises an octagonal cross section which is positioned at the front and/or back side of the telescopic chassis, which enables the connection of the middle extensible platform assembly and/or rear extensible platform assembly.

The structural and characteristic features and all advantages of the invention will be understood more clearly by the following figures and the detailed description made by making reference to such figures, and therefore the evaluation should be made in view of these figures and the detailed description.

### Figures to Help in Understanding the Invention

For the best possible understanding of embodiment of the current invention and the advantages of additional elements, it should be considered together with the figures described below.
Figure - 1: It is a perspective view of an octagonal telescopic extensible container carrier vehicle according to the invention.
Figure - 2: The cross view of the octagonal telescopic extensible container carrier according to the invention.

### Component References

10 Octagonal telescopic extensible container carrier vehicle
11 Telescopic chassis
12 Chassis Cross
12 Middle extensible platform assembly
14 Middle extensible telescope
15 Rear extensible platform assembly
16 Rear extensible telescope
17 Octagonal section

### Detailed Description Of The Invention

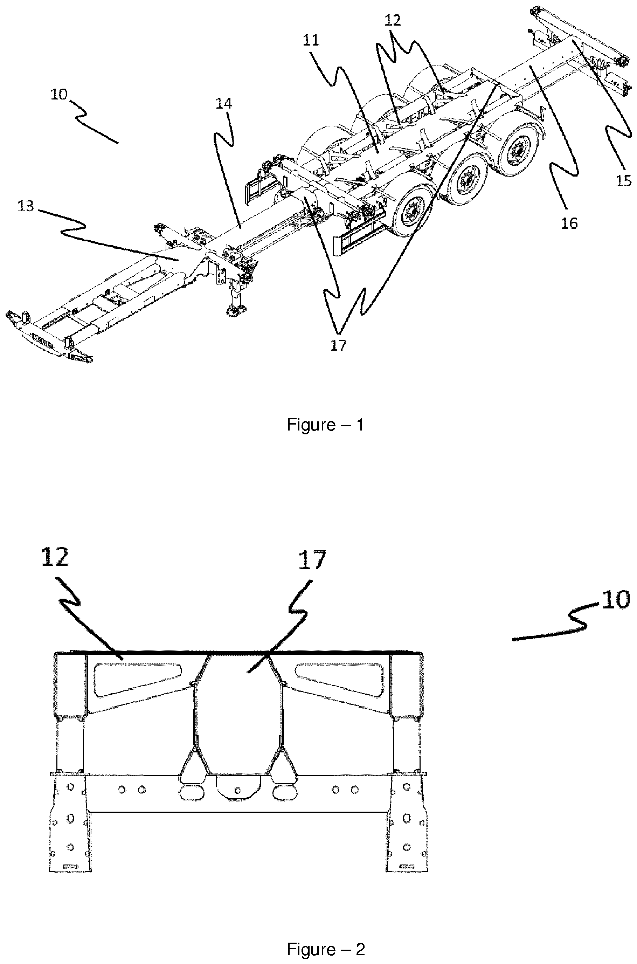

Figure 1 shows a perspective view of the octagonal telescopic extensible container carrier vehicle (10) according to the invention.. The container carrier semi trailer is the name given to the vehicle which has the specific number of dimensions and container locks produced for carrying the container. The size and types of containers are changed according to the type of container they carry. The octagonal telescopic extensible container carrier (10) is manufactured in a structure with telescopic construction which prevents the damage of the vehicle construction against the torsional force resulting from the rigid maneuvers of the vehicle which can be extended and shortened by the movement of one or more nested frames. The telescopic chassis (11) with octagonal cross section (17) consists of the moving parts and chassis crosses (12). The telescopic chassis (11) is the most important part of the vehicle's skeleton. The telescopic chassis (11) provides for the connection and/or positioning of the moving parts and other parts of the octagonal telescopic extensible container carrier vehicle (10). The chassis crosses (12) are connected to the telescopic chassis (11) to connect and/or support of the container octagonal telescopic extensible container carrier vehicle (10) .

There are octagonal sections (17) which are positioned at the front and/or rear of the telescopic chassis (11), which provide the connection of the middle extensible platform assembly (13) and/or the rear extensible platform assembly (15). The middle extensible platform assembly (13) forms the middle region of the octagonal telescopic extensible container carrier vehicle (10), which can be extended relative to the load to be transported in connection with the telescopic chassis (11). The middle extensible telescope (14) is positioned in the middle extensible platform assembly (13), it can be interlaced in the structure compatible with the octagonal section (17) telescopic chassis (11) with matching gear bearing etc. using the force transmission elements, the octagonal telescopic extensible container can be adjusted to the load to be carried by the carrier vehicle (10).

The rear extensible platform assembly (15) forms the rear region of the octagonal telescopic extensible container carrier vehicle (10) that extends relative to the load to be transported in connection with the telescopic chassis (11). The rear extensible telescope (16) is positioned at the rear extensible platform assembly (15), can be interlocked in conformity with the octagonal section (17), with the telescopic chassis (11) matching with the gear bearing and the like using the force transmission elements, the octagonal telescopic extensible container can be adjusted to the load to be carried by the carrier vehicle (10).

Figure 2 shows a sectional view of the octagonal telescopic extensible container carrier vehicle (10) according to the invention. There is an octagonal section (17) which is positioned at the front and/or rear of the telescopic chassis (11), which enables the connection of the midle extensible platform assembly (13) and/or the rear extensible platform assembly (15). The octagonal section (17) is formed in an octagonal form, which includes eight twisting points, which allows the telescopic movement in the telescopic chassis (11) and the eight points during torsion. The telescope (14) extending into the middle extends into the telescopic frame (11) through the octagonal section (17) In the same way, the telescope (16), which extends into the rear, enters into the telescopic frame (11) by bearing in the octagonal section (17). In this way, the octagonal telescopic extensible container carrier vehicle (10) can be extended and shortened according to the need. The telescopic movement in the telescopic chassis (11) of the octagonal telescopic extensible container carrier vehicle (10) provides eight-point assisted compression against external forces during torsion.

## Claims

1. An extensible container carrier vehicle (10), with a telescopic construction, whereby the vehicle can be extended or shortened by the movement of one or more nested frames, **characterized in that** a chassis (11), which forms the main frame of the vehicle (10), receives, telescopically along its center-line, both
- part of a front extensible platform assembly and
- part of a rear extensible platform assembly
wherein that part of the chassis which receives said part of the front extensible platform assembly and/or that part of the chassis which receives part of the rear extensible platform assembly has an octagonal cross-section.

2. An extensible container carrier vehicle (10) according to claim 1, **characterized in that**; a spherical bearing, such as a gear bearing, etc., which is positioned in mentioned middle extensible platform assembly (13), which may be interconnected in the structure conforming with the octagonal section (17), with the telescopic chassis (11) it comprises a middle extensible telescope (14) which enables the octagonal telescopic extensible container carrier vehicle (10) to be adjusted according to the load to be carried by using force transmission elements.

3. An extensible container carrier vehicle (10) according to claim 1, **characterized in that**; and a bearing such as a gear bearing, etc., which is positioned in mentioned rear extensible platform assembly (15), which may be interlaced in the structure conforming with the octagonal section (17), with the telescopic chassis (11) and a rear
extensible telescope (16) for adjusting the load of the octagonal telescopic extensible container carrier vehicle (10).

4. An extensible container carrier vehicle (10) according to claim 1, **characterized in that**; it comprises a chassis cross (12) that connects and/or supports the support of the octagonal telescopic extensible container carrier vehicle (10) in connection with mentioned telescopic chassis (11).

5. An extensible container carrier vehicle (10) according to claim 1, **characterized in that**; octagonal section (17) is an octagonal shaped product comprising eight twist points, which enables the telescopic movement in the telescopic chassis (11) and eight points during torsion.

## Patentansprüche

1. Ausziehbares Containertransportfahrzeug (10) mit einer teleskopischen Konstruktion, wobei das Fahrzeug durch die Bewegung eines oder mehrerer verschachtelter Rahmen erweitert oder verkürzt werden kann, **dadurch gekennzeichnet, dass** ein Chassis (11), das den Hauptrahmen des Fahrzeugs (10) bildet, entlang der Mittellinie teleskopisch folgendes empfängt:
- einen Teil einer vorderen ausziehbaren Plattformeinheit und
- einen Teil einer hinteren ausziehbaren Plattformeinheit,
wobei der Teil des Chassis, der den Teil der vorderen ausziehbaren Plattformeinheit und/oder der Teil des Chassis, der einen Teil der hinteren ausziehbaren Plattformeinheit empfängt, einen achteckigen Querschnitt aufweist.

2. Ausziehbares Containertransportfahrzeug (10) nach Anspruch 1, **dadurch gekennzeichnet, dass** dieses ein mittleres ausziehbares Teleskop (14) umfasst, das in der mittleren ausziehbaren Plattformeinheit (13) positioniert ist, die in der Struktur konform zu dem achteckigen Abschnitt (17) verbunden werden kann, wobei es dies ermöglicht, dass das achteckige, teleskopisch ausziehbare Containertransportfahrzeug (10) gemäß der zu tragenden Last angepasst werden kann unter Verwendung von Kraftübertragungselementen, wie etwa eines Kugellagers, eines Getriebelagers mit dem teleskopischen Chassis (11).

3. Ausziehbares Containertransportfahrzeug (10) nach Anspruch 1, **dadurch gekennzeichnet, dass** dieses ein hinteres ausziehbares Teleskop (16) umfasst, das in der hinteren ausziehbaren Plattformeinheit (15) positioniert ist, die in der Struktur konform zu dem achteckigen Abschnitt (17) verschachtelt werden kann, wobei es dies ermöglicht, dass das achteckige, teleskopisch ausziehbare Containertransportfahrzeug (10) gemäß der zu tragenden Last angepasst werden kann unter Verwendung von Kraftübertragungselementen, wie etwa eines Getriebelagers, durch Anpassung an das teleskopische Chassis (11).

4. Ausziehbares Containertransportfahrzeug (10) nach Anspruch 1, **dadurch gekennzeichnet, dass** dieses ein Chassiskreuzstück (12) umfasst, das den Träger des achteckigen, teleskopisch ausziehbaren Containertransportfahrzeug (10) in Verbindung mit dem teleskopischen Chassis (11) verbindet und/oder trägt.

5. Ausziehbares Containertransportfahrzeug (10) nach Anspruch 1, **dadurch gekennzeichnet, dass** der achteckige Abschnitt (17) ein achteckig geformtes Produkt ist, das acht Drehpunkte umfasst, was die teleskopische Bewegung in dem teleskopischen Chassis (11) ermöglicht, sowie acht Punkte während der Torsion.

## Revendications

1. Véhicule porte-conteneurs extensible (10), avec une construction télescopique, le véhicule pouvant ainsi être étendu ou raccourci par le mouvement d'au moins un cadre emboîté, **caractérisé en ce qu'**un châssis (11), qui forme le cadre principal du véhicule (10), reçoit, de manière télescopique le long de son axe central, à la fois
- une partie d'un ensemble de plate-forme extensible avant et
- une partie d'un ensemble de plate-forme extensible arrière
la partie du châssis qui reçoit ladite partie de l'ensemble de plate-forme extensible avant et/ou la partie du châssis qui reçoit une partie de l'ensemble de plate-forme extensible arrière ayant une section transversale octogonale.

2. Véhicule porte-conteneurs extensible (10) selon la revendication 1, **caractérisé en ce qu'**il comprend un télescope extensible intermédiaire (14) qui est positionné dans l'ensemble de plate-forme extensible intermédiaire (13) mentionné, qui peut être interconnecté dans la structure conforme à la section octogonale (17), qui permet au véhicule porte-conteneurs extensible (10) télescopique octogonal d'être réglé en fonction de la charge à porter à l'aide d'éléments de transmission de force tels qu'un palier sphérique, un palier d'engrenage, avec le châssis télescopique (11).

3. Véhicule porte-conteneurs extensible (10) selon la revendication 1, **caractérisé en ce qu'**il comprend un télescope extensible arrière (16) qui est positionné dans l'ensemble de plate-forme extensible arrière (15) mentionné, qui peut être entrelacé dans la structure conforme à la section octogonale (17), qui permet au véhicule porte-conteneurs extensible (10) télescopique octogonal d'être réglé en fonction de la charge à porter à l'aide d'éléments de transmission de force tels qu'un palier d'engrenage en correspondant au châssis télescopique (11).

4. Véhicule porte-conteneurs extensible (10) selon la revendication 1, **caractérisé en ce qu'**il comprend une croix de châssis (12) qui relie et/ou supporte le support du véhicule porte-conteneurs extensible télescopique (10) octogonal en liaison avec le châssis télescopique (11) mentionné.

5. Véhicule porte-conteneurs extensible (10) selon la revendication 1, **caractérisé en ce que** la section octogonale (17) est un produit de forme octogonale comprenant huit points de torsion, qui permet le mouvement télescopique dans le châssis télescopique (11) et huit points pendant la torsion.
